# EUROPEAN PATENT SPECIFICATION

(11) **EP 4 600 135 B1**
(45) Date of publication and mention of the grant of the patent: **27.05.2026**
(21) Application number: 24204725.6
(22) Date of filing: 04.10.2024
(51) Int. Cl.: B62M 6/40, B62M 11/02, B62M 6/60

(54) **DRIVE SYSTEM FOR ELECTRIC BICYCLE**
ANTRIEBSSYSTEM FÜR EIN ELEKTROFAHRRAD
SYSTÈME D'ENTRAÎNEMENT POUR BICYCLETTE ÉLECTRIQUE

(30) Priority: 08.02.2024 KR 20240019305; 17.07.2024 KR 20240094636
(43) Date of publication of application: 13.08.2025
(73) Proprietor: HL Mando Corporation, Pyeongtaek-si, Gyeonggi-do 17962 (KR)
(72) Inventor: HWANG, Yongsuk, 17962 Pyeongtaek-si, Gyeonggi-do (KR); SEO, Jaeman, 17962 Pyeongtaek-si, Gyeonggi-do (KR); LEE, Dongmin, 17962 Pyeongtaek-si, Gyeonggi-do (KR); PARK, Jinseok, 17962 Pyeongtaek-si, Gyeonggi-do (KR); AN, Soomin, 17962 Pyeongtaek-si, Gyeonggi-do (KR)
(74) Representative: BCKIP Part mbB

(56) References cited:
- EP-A1- 2 711 281
- DE-B4- 102023 132 627

## Description

### BACKGROUND

### Field

The present disclosure relates to a drive system for an electric bicycle, and more particularly, to a drive system for an electric bicycle which provides a pedal reaction force to a driver without a mechanical connection between a pedal crank shaft and a driving wheel, and converts pedal kinetic energy of the driver into electric energy.

### Description of the Related Art

In general, a bicycle is configured in which a front wheel which is a steering wheel and a rear wheel which is a driving wheel are disposed in a straight line in front and rear sides of a frame, and a rider steps on a pedal which is in conjunction with the rear wheel to rotate the rear wheel to allow the bicycle to move forward.

A power transmission device such as a chain or a bevel gear is installed in the bicycle in order to transmit power generated by the pedal to the rear wheel. In particular, the chain-scheme power transmission device is constituted by a driving sprocket wheel installed at one side of the pedal, a driven sprocket wheel having a smaller diameter than the driving sprocket wheel, and installed in the rear wheel which is the driving wheel, and a chain connecting the driving sprocket wheel and the driven sprocket wheel.

In such a configuration, when the driver steps on the pedal, the driving sprocket wheel installed integrally with the pedal rotates, and at the same time, the rear wheel connected to the driven sprocket wheel rotates jointly by the chain to move the bicycle forward.

Meanwhile, the power transmission device installed in the bicycle as such has a large occupancy and a complex structure, and there is a problem in that a hem of a driver is caught or contaminated between the driving sprocket wheel and the chain. In particular, when a multi-stage shift device is installed in the driven sprocket wheel, there is also a problem in that the chain is often left out of the sprocket wheel during shifting.

Considering such a problem, an electric bicycle without the power transmission device has been developed and used in recent years. The electric bicycle includes a motor rotating the rear wheel which is the driving wheel, a battery supplying power to the motor, and an electronic control device for controlling the motor and the battery, and the electric bicycle is driven by a scheme in which when the power is supplied to the motor by the electronic control device, the motor rotates a wheel.

Further, the electric bicycle includes an alternator that generates electricity by driving the pedal. The battery of the electric bicycle can be charged by using an external power supply or charged through an operation of rotating the alternator connected to the pedal with the pedal.

That is, the battery of the electric bicycle is enabled to be electrically charged by an alternator which is self-provided, and there are many cases in which the alternator is installed in the pedal to easily convert rotational force of the pedal into electric energy.

Meanwhile, in the electric bicycle without the power transmission device, when the driver steps on the pedal, a pedal load can be controlled so as to feel a pedal sense as if there is the chain, and as a result, a pedal effort is formed in the pedal when the pedal rotates, so the pedal sense can be felt.

Rotational force generated from electromagnetic elements (a rotator and a stator) installed inside the alternator provides appropriate pedal reaction force to the driver through a crank shaft and a crank arm, and a size of the reaction force is controlled by a controller.

However, since there is a limit (this is referred to as 'limited reaction force') in the size of the reaction force which can be provided by the electromagnetic elements inside the alternator by using the electric energy supplied from the battery, when the pedal effort of the driver exceeds the limited reaction force of the alternator, a feeling of turn-off or idling of the pedal is given to the driver regardless of driving of the electric vehicle, and such a feeling is conveyed to the driver very heterogeneous and unpleasant. Such a phenomenon is referred to as 'slip through'.

When a heavy load is loaded on the electric bicycle, when the electric bicycle starts on a steep slope, and in particular, when the driver steps on the pedal while holding a brake, a very large pedal effort of the driver is delivered to the pedal crank shaft while the motor and the driving wheel do not rotate, so there is a high risk of occurrence of the 'slip through' phenomenon.

EP 2 711 281 A1 discloses the features of the preamble of claim 1.

### SUMMARY

As disclosed in the prior art documents described above, an existing alternator applied to an electric bicycle has a form in which a crank shaft connected to a pedal, and a torque transmission unit constituted by a transmission and a rotor are configured in a housing.

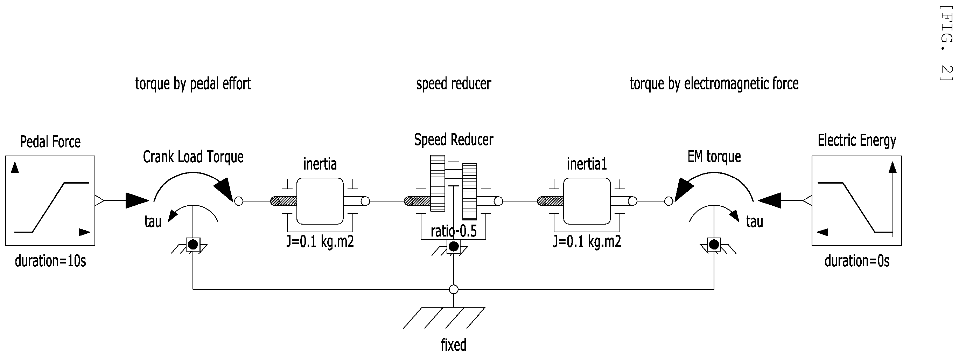

A relationship between a pedal effort of a driver and a reaction force generated from an electromagnetic element of the alternator in an existing alternator structure is illustrated in FIG. 2. The alternator having such a structure has a structure which is difficult to prevent occurrence of the 'slip through' phenomenon as described above.

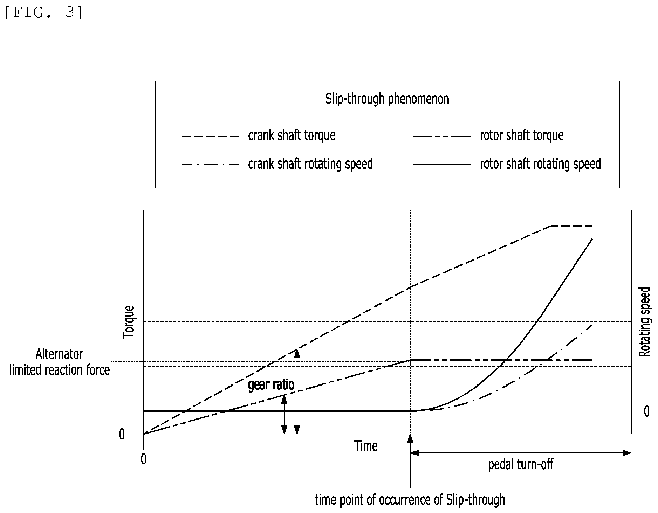

FIG. 3 is a graph for describing that a 'slip through' phenomenon occurs in an electric bicycle to which an existing alternator is applied. The graph shows a relationship between a crank shaft torque, a crank shaft rotating speed, a rotor shaft torque, and a rotor shaft rotating speed.

Referring to FIG. 3, in a condition in which a driving motor and a driving wheel of the electric bicycle do not rotate, the reaction force to the pedal effort is provided and the crank shaft does not rotate within the limited reaction force of the alternator, but when a pedal effort which exceeds the limited reaction force provided by the alternator is input, the crank shaft and an internal rotor rotate, and the electric bicycle stops in place, but the driver feels that the pedal is turned off.

As described above, there is a limit in torque which may be generated by converting only limited electric energy supplied from the battery of the electric bicycle, but a technical object to be achieved by the present disclosure is to provide an alternator and a drive system for an electric bicycle including the same, which may effectively prevent a 'slip through' phenomenon by overcoming such a limit.

The technical objects of the present disclosure are not restricted to the aforementioned technical objects, and other objects of the present disclosure, which are not mentioned above, will become more apparent to one of ordinary skill in the art to which the present disclosure pertains by referencing the detailed description of the present disclosure given below.

In order to achieve the technical object, according to an aspect of the present disclosure, a drive system for an electric bicycle may be provided, which includes: a motor providing a rotational force to a driving wheel; a battery supplying power to the motor; and an alternator providing a pedal reaction force to a driver, and converting kinetic energy of a pedal into electric energy, and supplying the electric energy to at least any one of the motor and the battery, in which the alternator includes a housing, a crank shaft installed to penetrate the housing, and having the pedal installed therein, a gear unit installed inside the housing, and speed-increasing or speed-decreasing the rotational force of the pedal, an alternation unit installed inside the housing, and receiving the rotational force of the pedal speed-increased or speed-decreased by the gear unit, and generating the electric energy, an elastic member installed between the housing and the gear unit, and elastically supporting the housing and the gear unit, and a frictional member which is installed in the housing to maintain a predetermined gap from the gear unit, and which some components of the gear unit contact by moving in an axial direction when a pedal effort larger than a limited reaction force which is a peak value of the pedal reaction force provided by the alternator is input.

A brake torque may be generated by the contact between some components of the gear unit, and the frictional member.

At least some of a plurality of gears constituting the gear unit may be provided as a Helical gear, and some components of the gear unit may move in an axial direction by an axial force generated by the gear provided as the Helical gear.

The elastic member may be interposed between the housing or a component coupled to the housing, and the gear unit.

The alternation unit may include a rotor coupled to an output side of the gear unit, and rotating, and a stator electromagnetically interacting with the rotor.

In an exemplary embodiment, the gear unit may include a carrier fixed to the crank shaft, a plurality of planetary gears supported by the carrier, and revolving and rotating with the crank shaft as a central axis by rotation of the carrier, and a sun gear installed on a circumference of the crank shaft, and rotating by engaging with the plurality of planetary gears.

Further, the gear unit may further include a ring gear provided on an inner wall of the housing, and rotating by engaging with the plurality of planetary gears.

The planetary gear, the sun gear, and the ring gear may be provided as the Helical gear.

When an axial force generated between the planetary gear and the ring gear is larger than an elastic force of the elastic member, the planetary gear and the ring gear may move in the axial direction on the crank shaft.

The elastic member may be interposed between the housing or the component coupled to the housing, and the carrier.

The frictional member may be installed on an inner surface of the housing facing the carrier.

In another exemplary embodiment, the gear unit may include a driving gear fixed to the crank shaft, an idle gear installed on an intermediate shaft provided apart from the crank shaft, and rotating by engaging with the driving gear, and a driven gear rotating by engaging with the idle gear.

At least some of the driving gear and the idle gear engaged with the driving gear may be provided as the Helical gear.

When an axial force generated between the driving gear and the idle gear is larger than the elastic force of the elastic member, the driving gear and the idle gear may move in the axial direction on the crank shaft and the intermediate shaft, respectively.

The elastic member may be interposed between the housing or the component coupled to the housing, and the idle gear, and the frictional member may be installed on the inner surface of the housing facing the idle gear.

The drive system for an electric bicycle according to the present disclosure has an effect in that a limit of the pedal reaction force by electromagnetic force is overcome to effectively prevent the 'slip through' phenomenon from occurring. This means that a comfortable pedal sense may be provided to a driver of the electric bicycle, so the merchantability of the electric bicycle may also be significantly enhanced.

Further, the present disclosure has an advantage in that the sizes of the electromagnetic elements (the rotor and the stator) may be excluded from being unnecessarily increased in order to prevent the 'slip through' phenomenon only with the electromagnetic force.

Moreover, according to the present disclosure, since a location of the crank shaft is maintained by a brake torque, the electromagnetic force may be reduced to reduce current consumption and reduce heat dissipation, and a driving distance of the electric bicycle may also be enhanced due to reduced electric energy consumption.

The effects of the present disclosure are not limited to the aforementioned effects, and other effects, which are not mentioned above, will be apparently understood to a person having ordinary skill in the art from the following description.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a diagram illustrating an electric bicycle;
FIG. 2 is a diagram schematizing and illustrating a relationship between a pedal effort of a driver and a reaction force generated from an electromagnetic element of an alternator in an electric bicycle having an alternator in related art;
FIG. 3 is a graph for describing that a 'slip through' phenomenon occurs in an electric bicycle to which an existing alternator is applied;
FIG. 4 is a diagram illustrating a structure of an alternator according to a first exemplary embodiment of the present disclosure applied to an electric bicycle;
FIG. 5 is an enlarged view of a part marked with 'A' in FIG. 4;
FIG. 6 is a diagram illustrating a state in which an axial force is generated from the alternator according to the first exemplary embodiment of the present disclosure, and some components of a gear unit move in an axial direction;
FIG. 7 is a diagram illustrating a structure of an alternator according to a second exemplary embodiment of the present disclosure applied to an electric bicycle;
FIG. 8 is a diagram illustrating a state in which the axial force is generated from the alternator according to the second exemplary embodiment of the present disclosure, and some components of the gear unit move in the axial direction;
FIG. 9 is a diagram schematizing and illustrating a relationship between a pedal effort of a driver and a reaction force generated from an electromagnetic element of an alternator in an electric bicycle having an alternator according to the present disclosure; and
FIG. 10 is a graph for describing that a 'slip through' phenomenon of the electric bicycle is prevented according to the application of the alternator according to the present disclosure.

### DETAILED DESCRIPTION OF THE EMBODIMENT

Hereinafter, the present disclosure will be described in detail with reference to the accompanying drawings. The following exemplary embodiment is to fully present the idea of the present disclosure to those skilled in the art to which the present disclosure pertains. The present disclosure is not limited to exemplary embodiments described presented herein and may be embodied in other forms. In the drawings, illustration of parts not related to the description to clarify the present disclosure is omitted, and the size of a component may be slightly exaggerated and expressed to help understanding.

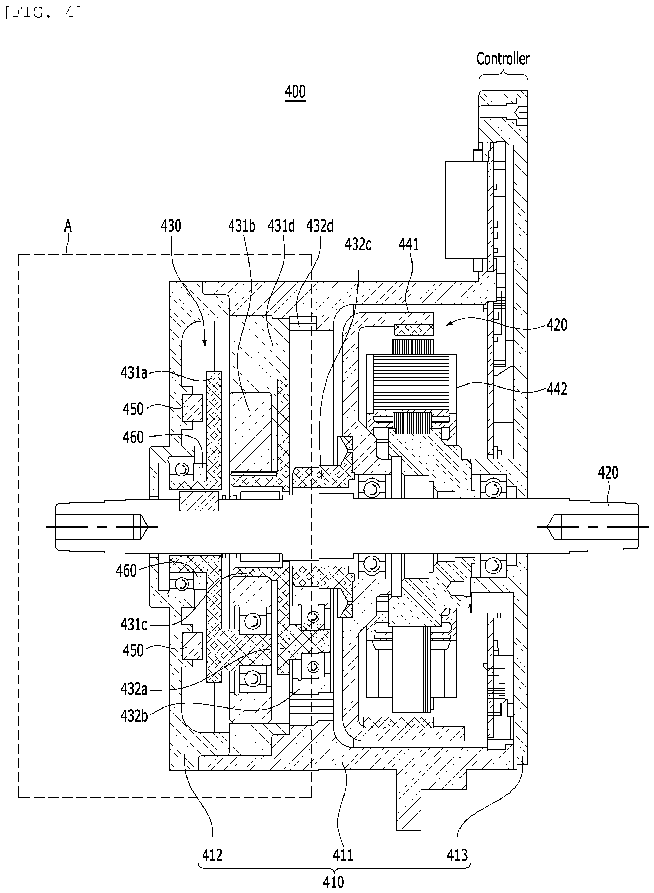

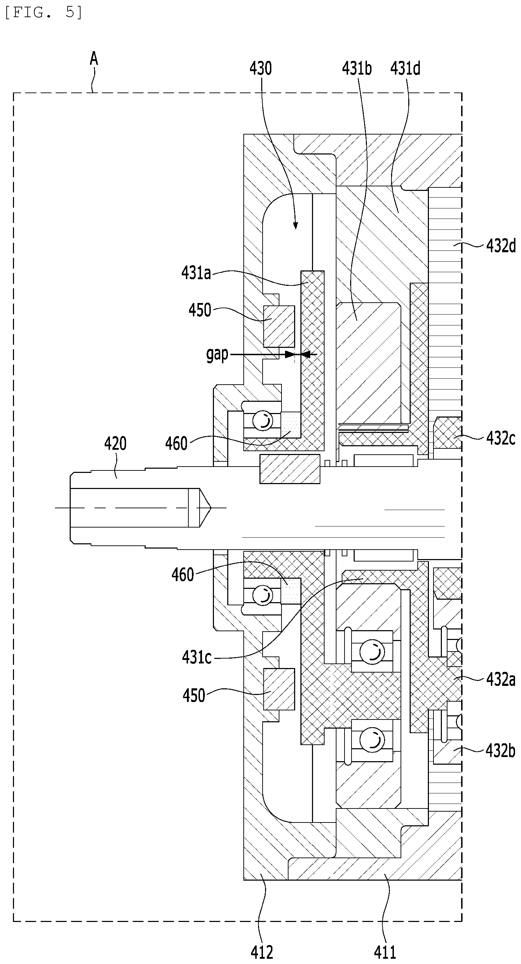

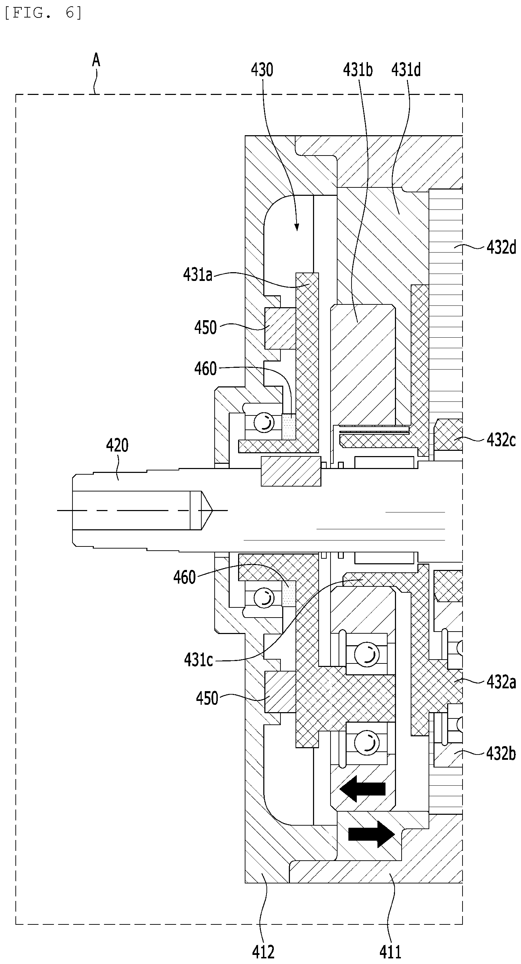

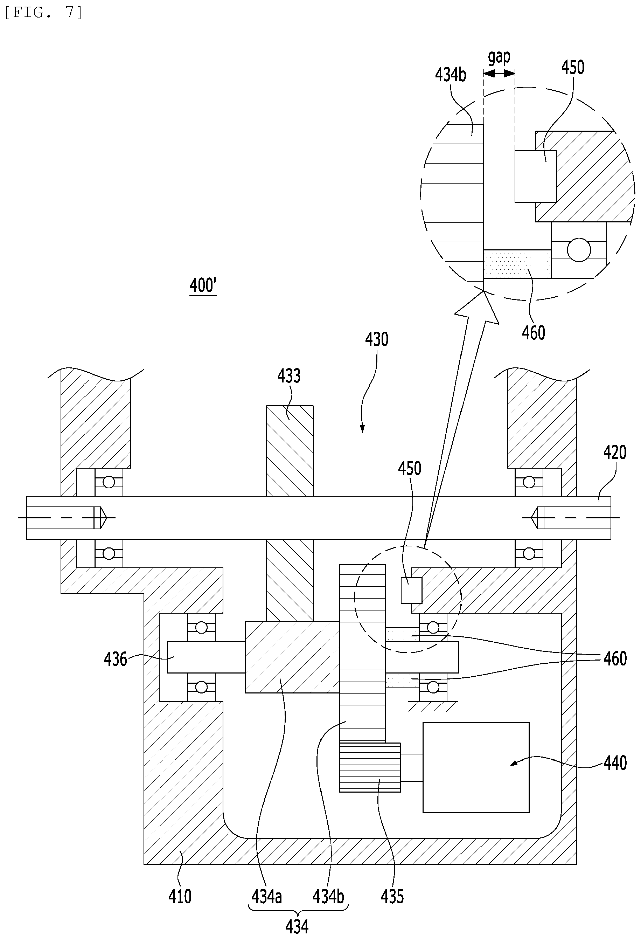

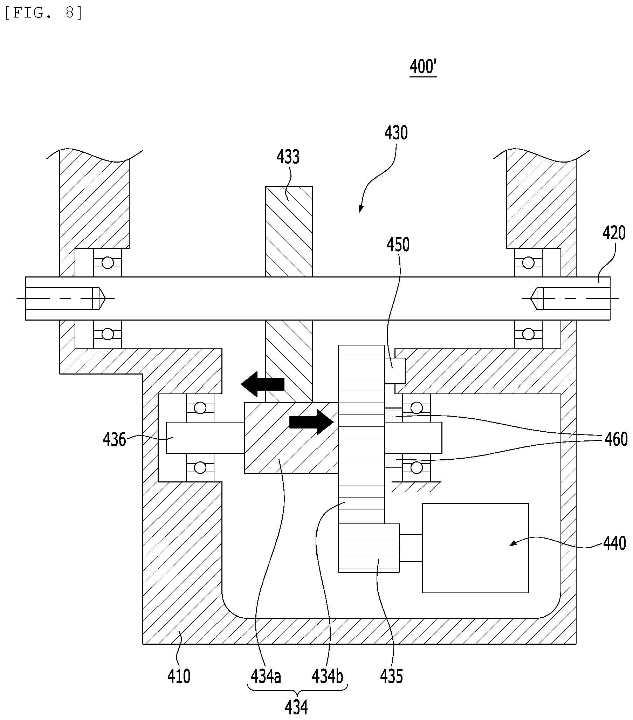

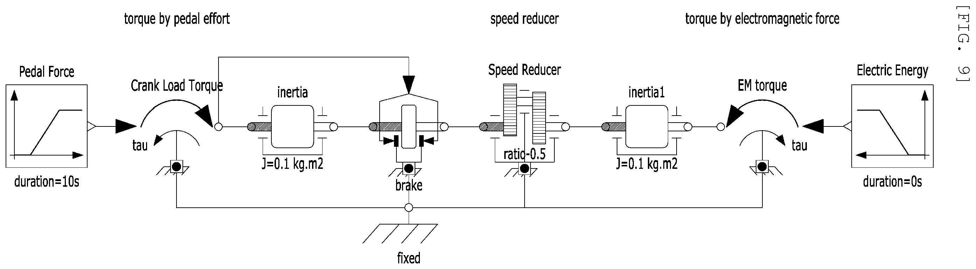

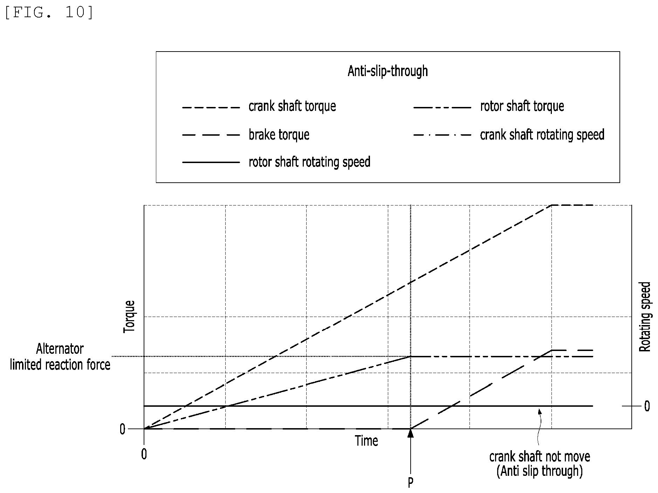

FIG. 4 is a diagram illustrating a structure of an alternator according to a first exemplary embodiment of the present disclosure applied to an electric bicycle, FIG. 5 is an enlarged view of a part marked with 'A' in FIG. 4, and FIG. 6 is a diagram illustrating a state in which an axial force is generated from the alternator according to the first exemplary embodiment of the present disclosure, and some components of a gear unit move in an axial direction. FIG. 7 is a diagram illustrating a structure of an alternator according to a second exemplary embodiment of the present disclosure applied to an electric bicycle, and FIG. 8 is a diagram illustrating a state in which the axial force is generated from the alternator according to the second exemplary embodiment of the present disclosure, and some components of the gear unit move in the axial direction. FIG. 9 is a diagram schematizing and illustrating a relationship between a pedal effort of a driver and a reaction force generated from an electromagnetic element of an alternator in an electric bicycle having an alternator according to the present disclosure, and FIG. 10 is a graph for describing that a 'slip through' phenomenon of the electric bicycle is prevented according to the application of the alternator according to the present disclosure.

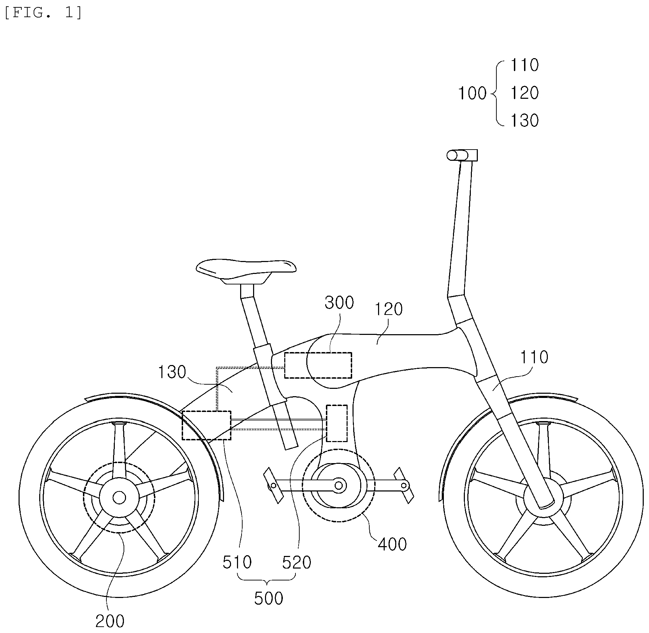

As illustrated in FIG. 1, the electric bicycle according to the present disclosure may have a structure in which there is no mechanical power connection means between a pedal driving unit and a driving wheel. Referring to FIG. 1, the electric bicycle according to the present disclosure may be configured to include: a frame 100 constituting a vehicle body; a motor 200 installed on the frame 100, and providing rotational force to the driving wheel; a battery 300 supplying power to the motor 200; an alternator 400 providing a pedal reaction force to a driver, and converting pedal kinetic energy of the driver into electric energy, and returning the electric energy to the motor 200 and/or the battery 300; and a controller 500 separately or integrally controlling the motor 200 and the alternator 400.

The frame 100 may be configured to include a front frame 110, a middle frame 120, and a rear frame 130.

A front wheel is rotatably mounted on the front frame 110. Further, a handle stem may be provided on one end of the front frame 110, and a handle unit for steering the electric bicycle may be coupled to an upper portion of the handle stem.

A pedal housing for installing the pedal and the alternator 400 may be provided at a lower end of the middle frame 120, and a saddle tube for installing a saddle may be provided at an upper end. The alternator 400 may be mounted inside the pedal housing, and the pedals may be rotatably mounted on both sides of the alternator 400. At this time, a housing 410 of the alternator 400 to be described below may also constitute the pedal housing as itself.

A rear wheel is rotatably mounted on the rear frame 130. The motor 200 for advancing the electric bicycle by rotating the rear wheel may be mounted on the center of the rear wheel.

The front frame 110, the middle frame 120, and the rear frame 130 are coupled by a hinge shaft (not illustrated) penetrating the frame at one end of each frame, and a plurality of frames 110, 120, and 130 is folded to each other by rotation of the hinge shaft to enhance storage and portability. Unlike this, the front frame 110, the middle frame 120, and the rear frame 130 are integrally provided to simplify a structure and a manufacturing process, and at the same time, enhance the rigidity of the bicycle body.

The motor 200 may operate by receiving the power from the battery 300, and drives the rear wheel which is the driving wheel of the electric bicycle as much as a requirement by pedaling of the driver. In the exemplary embodiment, it is described as an example that the rear wheel of the electric bicycle is the driving wheel, but the front wheel may also be provided as the driving wheel, and in this case, the motor 200 will be installed at the front wheel.

The battery 300 may be mounted inside the middle frame 120. However, the present disclosure is not limited thereto, and the battery 300 may be mounted inside the front frame 110 or the rear frame 130, or is mounted outside the frame 100 via a bracket (not illustrated) to achieve smooth maintenance, of course.

The alternator 400 is provided to convert the rotational force of the pedal generated by the pedal effort of the driver into the electric energy. The electric energy converted by the alternator 400 may be supplied as driving power of the motor 200, or charged in the battery 300.

The controller 500 may separately control or integrally control the motor 200 and the alternator 400. In the exemplary embodiment, the controller 500 may include a first electronic control unit 510 connected to the motor 200 and a second electronic control unit 520 connected to the alternator 400.

The motor 200 may be electrically connected to the first electronic control unit 510 embedded inside the rear frame 130 and the alternator 400 may be electrically connected to the second electronic control unit 520 embedded inside the middle frame 120. Here, installation locations of the first electronic control unit 510 and the second electronic control unit 520 are not particularly limited as described above. All of the respective frames 110, 120, and 130 constituting the electric bicycle according to the present disclosure have accommodation spaces therein, so components such as the battery 300 or the electronic control units 510 and 520 may be moved to and placed in frames at locations different from the locations illustrated in the drawing, of course.

Further, the controller 500 of the exemplary embodiment may not be separated into two electronic control units 510 and 520, but integrally provided. Even when the controller 500 is provided in an integrated form, any one of the front frame 110, the middle frame 120, and the rear frame 130 may be appropriately selected and placed.

Further, the controller 500 of the exemplary embodiment may also be separately configured outside the motor 200 or the alternator 400, but is also possible to be configured in a form in which the controller 500 is included in the motor 200 or the alternator 400. This may be individually applied to two electronic control units 510 and 520 constituting the controller 500. For example, the first electronic control unit 510 connected to the motor 200 may be configured inside or outside the motor 200, and the second electronic control unit 520 connected to the alternator 400 may configured inside or outside the alternator 400.

Meanwhile, in the electric bicycle according to the present disclosure, there is a technical object to prevent the 'slip through' phenomenon from occurring by overcoming the limited reaction force provided by the electromagnetic element in the alternator 400, so hereinafter, the structure and the operation of the alternator 400 according to the present disclosure will be described in detail for each exemplary embodiment.

### <First Exemplary Embodiment>

FIG. 4 is a diagram illustrating a structure of an alternator according to a first exemplary embodiment of the present disclosure applied to an electric bicycle, FIG. 5 is an enlarged view of a part marked with 'A' in FIG. 4, and FIG. 6 is a diagram illustrating a state in which an axial force is generated from the alternator according to the first exemplary embodiment of the present disclosure, and some components of a gear unit move in an axial direction.

Referring to FIGS. 4 to 6, the alternator 400 according to the first exemplary embodiment of the present disclosure may be configured to include a housing 410, a crank shaft 420 installed to penetrate the housing 410, and having both ends with pedals, and a gear unit 430 and an alternation unit 440 accommodated inside the housing 410.

The housing 410 may be provided in a cylindrical shape having a hollow therein, and mounted on the inside of the pedal housing provided at one end of the middle frame 120. The housing 410 of the alternator 400 may be provided integrally with the pedal housing as described above. That is, the housing itself of the alternator 400 constitutes the pedal housing to reduce component elements and simplify the structure.

The housing 410 may include a hollow body 411 of which both ends are opened, and a pair of covers 412 and 413 closing both opened side surfaces of the body 411.

The crank shaft 420 may be installed to penetrate the housing 410, and the pedals may be rotatably installed at both ends of the crank shaft 420 protruding to the outside of the housing 410.

A bearing is provided between the housing 410 and the crank shaft 420 to achieve smooth rotation of the crank shaft 420 to the housing 410, and reduce abrasion between the component elements. More specifically, bearings are mounted on covers 412 and 413 constituting both side surfaces of the housing 410, respectively to support the crank shaft 420 to be relatively rotatable.

The gear unit 430 increases or decreases the rotational force of the pedal to increase alternation efficiency of the alternation unit 440 which generates electricity by the rotational force of the gear unit 430.

The gear unit 430 and the alternation unit 440 may be continuously placed on a circumference of the crank shaft 420 in an internal space of the housing 410 in an axial direction. The gear unit 430 may be provided to be speed-increased or speed-decreased with an input side connected to the crank shaft 420, and the alternation unit 440 may be connected to an output side of the gear unit 430 which is speed-increased or speed-decreased compared to a rotational speed of the input side of the gear unit 430.

As an example, the gear unit 430 of the exemplary embodiment may include a first speed-increase unit 431 constituted by a first carrier 431a, a first planetary gear 431b, a first sun gear 431c, and a first ring gear 431d, and a second speed-increase unit 432 constituted by a second carrier 432a, a second planetary gear 432b, a second sun gear 432c, and a second ring gear 432d. The first speed-increase unit 431 and the second speed-increase unit 432 may be placed on the crank shaft 420 in series.

The first speed-increase unit 431 may include the first carrier 431a fixed to the crank shaft 420 and transmitting the rotational force of the pedal, a plurality of first planetary gears 431b supported by the first carrier 431'a, and revolving and rotating with the crank shaft 420 as a central axis by the rotation of the first carrier 431a, the first sun gear 431c installed on the circumference of the crank shaft 420, engaging with the plurality of first planetary gears 431b and rotating jointly with the rotation of the first planetary gear 431b, and the first ring gear 431d provided on an inner wall of the housing 410, and engaging with the first planetary gear 431b, and rotating jointly with the revolving of the first planetary gear 431b.

The first carrier 431a is fixed and installed on the circumference of the crank shaft 420, and when the driver steps on and rotates the pedal, the crank shaft 420 and the first carrier 431a fixed thereto rotate jointly. The first carrier 431a also serves to support the plurality of first planetary gears 431b engaged between the first sun gear 431c and the first ring gear 431d at the same interval.

A plurality of first planetary gears 431b may be provided to constitute one set, and the plurality of first planetary gears 431b are engaged between the first sun gear 431c and the first ring gear 431d to revolve and rotate with the crank shaft 420 as the central axis. The first planetary gear 431b is in outer contact with the first sun gear 431c, and in inner contact with the first ring gear 431d.

A hollow is formed at the center of the first sun gear 431c to be penetrated by the crank shaft 420. An outer periphery of the first sun gear 431c is engaged with the plurality of first planetary gears 431b, so the first sun gear 431c rotates on the crank shaft 420. The bearing may be interposed between the crank shaft 420 and the first sun gear 431c.

As described in the exemplary embodiment, the first planetary gear 431b, the first sun gear 431c, and the first ring gear 431d may be provided as Helical gears.

The second speed-increase unit 432 may include the second carrier 432a fixed to the first sun gear 431c and transmitting the rotational force, a plurality of second planetary gears 432b supported by the second carrier 432a, and revolving and rotating with the crank shaft 420 as the central axis by the rotation of the second carrier 432a, the second sun gear 432c installed on the circumference of the crank shaft 420, engaged with the plurality of second planetary gears 432b and rotating jointly with the rotation of the second planetary gear 432b, and the second ring gear 432d provided on the inner wall of the housing 410, and engaged with the second planetary gear 432b, and rotating jointly with the revolving of the second planetary gear 432b.

The second carrier 432a is installed on the circumference of the crank shaft 420, and rotates jointly depending on the rotation of the first sun gear 431c. The second carrier 432a may be provided as in integrated configuration in a form of protruding on the circumference of the first sun gear 431c. The second carrier 432a also serves to support the plurality of second planetary gears 432b engaged between the second sun gear 432c and the second ring gear 432d at the same interval.

A plurality of second planetary gears 432b may be provided to constitute one set, and the plurality of second planetary gears 432b are engaged between the second sun gear 432c and the second ring gear 432d to revolve and rotate with the crank shaft 420 as the central axis. The second planetary gear 432b is in outer contact with the second sun gear 432c, and in inner contact with the second ring gear 432d.

The hollow is formed at the center of the second sun gear 432c to be penetrated by the crank shaft 420. An outer periphery of the second sun gear 432c is engaged with the plurality of second planetary gears 432b, so the second sun gear 432c rotates on the crank shaft 420. The bearing may be interposed between the crank shaft 420 and the second sun gear 432c.

In the gear unit 430 of the exemplary embodiment, the first carrier 431a which rotates by the crank shaft 420 in the first speed-increase unit 431 constitutes the input side, and the first sun gear 431c which rotates between the plurality of first planetary gears 431b constitutes the output side. When the first carrier 431a of the first speed-increase unit 431 rotates, the plurality of first planetary gears 431b revolves and rotates along an inner periphery of the first ring gear 431d, and as a result, the first sun gear 431c engaged with the first planetary gear 431b speed-increases and rotates.

In the second speed-increase unit 432, the second carrier 432a which rotates by the first sun gear 431c constitutes the input side, and the second sun gear 432c which rotates between the plurality of second planetary gears 432b constitutes the output side. When the second carrier 432a of the second speed-increase unit 432 rotates, the plurality of second planetary gears 432b revolves and rotates along an inner periphery of the second ring gear 432d, and as a result, the second sun gear 432c engaged with the second planetary gear 432b speed-increases and rotates.

That is, the first speed-increase unit 431 and the second speed-increase unit 432 are connected to each other in series in two stages so as to be provided to speed-increase the rotational force input by the pedal. When a larger speed-increase is desired, the gear unit 430 of the exemplary embodiment may also be configured to include three or more plural speed-increase units connected in series. Of course, the gear unit 430 may also be configured as a single stage including only the first speed-increase unit 431.

Meanwhile, in the exemplary embodiment, it is described that the alternator 400 is provided in a form of a speed increaser in which an output RPM increases compared to an input RPM (pedal RPM), but the alternator 400 of the exemplary embodiment may also be provided in a form of a speed reducer in which the output RPM decreases compared to the input RPM (pedal RPM).

The alternation unit 440 of the exemplary embodiment may include a rotor 441 which is coupled to the output side of the gear unit 430, and rotates, and a stator 442 which electromagnetically interacts with the rotor 441.

The rotor 441 may be provided to rotate by the gear unit 430, and to this end, the rotor 441 of the exemplary embodiment may be coupled (axially connected) to the second sun gear 432c which is a final output side of the gear unit 430. The rotor 441 may include a plurality of permanent magnets on an inner periphery thereof, and may be configured to surround a radial outer circumference of the stator 442.

The stator 442 may include multiple winded coils. The stator 442 may be installed on the circumference of the crank shaft 420, and the bearing may be interposed between the crank shaft 420 and the stator 442.

As described above, the alternator 400 according to the exemplary embodiment is configured to include a power transmission structure in which the crank shaft 420, the gear unit 430, and the alternation unit 440 are connected. Hereinafter, an operation of the alternator 400 according to the exemplary embodiment, which generates electricity by using a rotational force of the pedal will be described in brief.

First, when the driver steps on and rotates the pedal, the first carrier 431a rotates by the rotation of the crank shaft 420. When the first carrier 431a rotates, the first planetary gear 431b revolves and rotates along the inner periphery of the first ring gear 431d, and as a result, the first sun gear 431c engaged with the first planetary gear 431b rotates. Through such a process, a rotational speed of the pedal primarily increases.

Subsequently, the second carrier 432a of the second speed-increase unit 432 rotates by the rotation of the first sun gear 431c of the first speed-increase unit 431. When the second carrier 432a rotates, the second planetary gear 432b revolves and rotates along the inner periphery of the second ring gear 432d, and as a result, the second sun gear 432c engaged with the second planetary gear 432b rotates. Through such a process, the rotational speed of the pedal secondarily increases.

Subsequently, the second sun gear 432c rotates the rotor 441 of the alternation unit 440, and as a result, electricity may be generated by an electromagnetic interaction between the rotor 441 and the stator 442. The generated electricity may be supplied as driving power of the motor 200, or charged in the battery 300.

The alternator 400 according to the first exemplary embodiment as a component for preventing the 'slip through' phenomenon may further include a frictional member 450 installed at the housing 410 side, and an elastic member 460 installed at the gear unit 430 side facing an inner surface of the housing 410.

The frictional member 450 may be attached and installed onto the inner surface of the housing 410, more preferably, one surface of the cover 412 installed to face the first carrier 431a in the housing 410.

The frictional member 450 may be installed at each of an upper side and a lower side based on the crank shaft 420. Two or more plural frictional members 450 may be provided, and installed on the inner wall of the housing 410 along the circumference of the crank shaft 420, or are also possible to be provided as a ring-shaped integrated member of which the center is penetrated, and installed on the inner wall of the housing 410.

The frictional member 450 may generate a brake torque by frictional force when some components of the gear unit 430 move and contact in the axial direction as described below.

Since the frictional member 450 is a component that intends to generate the frictional force in contact with a gear made of a metallic or plastic material, by considering this, the frictional member 450 may be provided as a rubber material. However, since the frictional member 450 is not good if the frictional member 450 is too soft, it is recommended that the frictional member 450 has hardness of a predetermined level or higher, and wear and heat resistance characteristics are also formed at a predetermined level or higher, so it will be desirable that the frictional member 450 of the exemplary embodiment is made a complex material.

The frictional member 450 of the exemplary embodiment may be provided as a material such as a synthetic rubber or a rubber cork friction material, and is also possible to be configured as a form in which a friction sheet having a friction coefficient, and heat and wear resistance characteristics at a predetermined level or higher is attached to a rigid core having hardness of a predetermined level or higher.

As the name suggests, the elastic member 460 may be provided as a material having an elastic force, and interposed between the housing 410 or the component (e.g., bearing) coupled to the housing 410, and the gear unit 430.

The elastic member 460 may be installed in at least one of the components constituting the gear unit 430. In the exemplary embodiment, it is described as a preferred exemplary embodiment that the elastic member 460 is attached and installed onto the surface of the first carrier 431a constituting the input side in the gear unit 430.

In the exemplary embodiment, the housing 410, and the first carrier 431a of the gear unit 430 may be elastically supported in the axial direction by the elastic member 460. As described above, the component of the gear unit 430 supported by the elastic member 460 or a member fixed to the component may be initially set to maintain a predetermined gap from the frictional member 450 in the axial direction. Referring to FIG. 5, a state in which a body surface of the first carrier 431a maintains a predetermined gap from the frictional member 450 may be seen.

Here, when a torque transmitted to the crank shaft 420 becomes larger than a predetermined value, for example, when a pedal effort which exceeds the limited reaction force provided by the alternator 400 is input while the pedal of the electric bicycle does not rotate, some components of the gear unit 430 move in an axial direction by an axial force generated from a gear type component provided as a Helical gear among the components of the gear unit 430, and contacts the frictional member 450 as illustrated in FIG. 6, and the brake torque is generated due to the contact between the component of the gear unit 430, and the frictional member 450.

A relationship between the pedal effort of the driver and the reaction force generated by the electromagnetic element in the alternator structure according to the first exemplary embodiment of the present disclosure, which has the above structure is schematized in FIG. 9.

FIG. 10 is a graph for describing that a 'slip through' phenomenon of the electric bicycle is prevented according to the application of the alternator according to the present disclosure. The graph shows a relationship between a crank shaft torque, a crank shaft rotating speed, a rotor shaft torque, a rotor shaft rotating speed, and a brake torque generated by the contact with the frictional member 450.

Referring to FIGS. 4 to 6, and 10, under a condition in which the driving motor and the driving wheel of the electric bicycle do not rotate, when a torque transmitted to the crank shaft 420 by the pedal effort of the driver becomes larger than a predetermined value, some components of the gear unit 430 move by the axial force generated from the gear type component provided as the Helical gear among the components of the gear unit 430 (the state of FIG. 5 is changed to the state of FIG. 6), and contact the frictional member 450, and the brake torque is generated due to the contact between the component of the gear unit 430, and the frictional member 450.

More specifically, when the axial force generated between the first planetary gear 431b and the first ring gear 431d of the gear unit 430 becomes larger than the elastic force of the elastic member 460, the first planetary gear 431b and the first carrier 431a move in the axial direction, and compress the elastic member 460, and the brake torque is generated from a time point when the first carrier 431a contacts the frictional member 450.

At this time, as the torque by the pedal effort becomes larger, the axial force also becomes larger, so as the axial force becomes larger by a relationship of "friction coefficient × vertical drag force", the brake torque generated between the frictional member 450 and the first carrier 431a also increases accordingly, and as a result, it becomes possible to maintain a location of the crank shaft 420 without an increase in torque by the electromagnetic force.

Accordingly, since a lacking reaction force which may not be provided by the alternator 400 may be provided by a brake torque generated by friction of the first carrier 431a and the frictional member 450 from a motor torque limit point (represented by 'P'), the 'slip through' phenomenon of the electric bicycle may be effectively prevented.

Thereafter, when the torque acting on the crank shaft 420 by the pedal effort of the driver is reduced, the brake torque is also reduced and released again while the components of the gear unit 430 including the first carrier 431a returns to the original location by the elastic force of the elastic member 460.

### <Second Exemplary Embodiment>

FIG. 7 is a diagram illustrating a structure of an alternator according to a second exemplary embodiment of the present disclosure applied to an electric bicycle, and FIG. 8 is a diagram illustrating a state in which the axial force is generated from the alternator according to the second exemplary embodiment of the present disclosure, and some components of the gear unit move in the axial direction.

The alternator 400 according to the first exemplary embodiment of the present disclosure has a coaxial structure in which the alternation unit 440 including the rotor 441 and the stator 442 is placed on the crank shaft 420 jointly with the gear unit 430, while the alternator 400' according to the second exemplary embodiment of the present disclosure is provided in a bi-axial structure in which the alternation unit 440 including the rotor and the stator is not directly coupled to the crank shaft 420.

Referring to FIGS. 7 and 8, the alternator 400' according to the second exemplary embodiment of the present disclosure may be configured to include a housing 410, a crank shaft 420 installed to penetrate the housing 410, and having both ends with pedals, and a gear unit 430 and an alternation unit 440 accommodated inside the housing 410. At this time, the alternator 400' according to the second exemplary embodiment of the present disclosure further includes an intermediate shaft 436 provided apart from the crank shaft 420, and is different from the first exemplary embodiment in that the alternation unit 440 is connected to a gear step provided on the intermediate shaft 436 rather than the gear directly coupled to the crank shaft 420.

In the exemplary embodiment, the housing 410 and the crank shaft 420 may be provided similarly to the first exemplary embodiment described above, so a redundant description is omitted. However, in the exemplary embodiment, since the configuration and the arrangement of the gear unit 430 and the alternation unit 440 accommodated inside the housing 410 are different, the internal/external shape of the housing 410 may be differently configured accordingly.

The gear unit 430 may be provided to be speed-increased or speed-decreased with an input side connected to the crank shaft 420, and the alternation unit 440 may be connected to an output side of the gear unit 430 which is speed-increased or speed-decreased compared to a rotational speed of the input side of the gear unit 430. As described above, the gear unit 430 speed-increases or speed-decreases the rotational force of the pedal to increase alternation efficiency of the alternation unit 440 which generates electricity by the rotational force of the gear unit 430.

More specifically, the gear unit 430 of the exemplary embodiment may include a driving gear 433 fixed to the crank shaft 420 and transmitting the rotational force of the pedal, an idle gear 434 installed on the intermediate shaft 436 provided apart from the crank shaft 420, and rotating by engaging with the driving gear 433, and a driven gear 435 rotating by engaging with the idle gear 434.

The driving gear 433 is fixed and installed onto the circumference of the crank shaft 420, and when the driver steps on and rotates the pedal, the crank shaft 420 and the driving gear 433 fixed thereto rotate jointly.

The idle gear 434 may include a small gear 434a engaged with the driving gear 433, and a large gear 434b engaged with the driven gear 435 to be described below. The small gear 434a and the large gear 434b are configured as an integrated member, and the large gear 434b may have a larger diameter than the small gear 434a.

In the exemplary embodiment, the idle gear 434 may be installed on the intermediate shaft 436 provided apart from the crank shaft 420. The intermediate shaft 436 may be supported on the inner wall of the housing 410, and the bearing is provided between the housing 410 and the intermediate shaft 436 to reduce abrasion between component elements.

The driven gear 435 may rotate by engaging with the large gear 434b of the idle gear 434. The driven gear 435 may be coupled (axially connected) to the rotor which is a component of the alternation unit 440 to be described below.

In the gear unit 430 of the exemplary embodiment, the driving gear 433 coupled to the crank shaft 420 and rotating constitutes the input side, and the driven gear 435 constitutes the output side.

In the exemplary embodiment, the driving gear 433, and the small gear 434a of the idle gear 434 engaged therewith may be provided as the Helical gear, and the large gear 434b of the idle gear 434, and the driven gear 435 engaged therewith may be provided as a Spur gear.

The alternation unit 440 may include a rotor which is coupled to the driven gear 435 as the output side of the gear unit 430, and rotates, and a stator which electromagnetically interacts with the rotor. The rotor and the stator which are the electromagnetic elements constituting the alternation unit 440 may be configured similarly to the first exemplary embodiment described above, so a redundant description is omitted, and illustration is also simplified.

Hereinafter, an operation of the alternator 400' according to the exemplary embodiment, which generates electricity by using the rotational force of the pedal will be described in brief.

First, when the driver steps on and rotates the pedal, the driving gear 433 rotates by the rotation of the crank shaft 420. The rotational force of the driving gear 433 is transmitted to the driven gear 435 via the idle gear 434, and finally, the rotor of the alternation unit 440 coupled to the driven gear 435 rotates. At this time, the rotational speed of the pedal is increased according to a gear ratio of the driving gear 433 and the small gear 434a, and a gear ratio of the large gear 434b and the driven gear 435, and transmitted to the alternation unit 440 side.

The alternator 400' according to the second exemplary embodiment as a component for preventing the 'slip through' phenomenon may further include a frictional member 450 installed at the housing 410 side, and an elastic member 460 installed at the gear unit 430 side facing an inner surface of the housing 410 similarly to the first exemplary embodiment.

The frictional member 450 may be attached and installed onto the inner surface of the housing 410, more preferably, one surface facing the idle gear 434 in the housing 410. As illustrated, the frictional member 450 may be installed on the inner wall near the intermediate shaft 436 installed in the housing 410. The accompanying drawing, which is simplified and illustrated, illustrates that only one frictional member 450 is installed, but the frictional member 450 may be installed at each of an upper side and a lower side based on the intermediate shaft 436. Two or more plural frictional members 450 may be provided, and installed on the inner wall of the housing 410 along the circumference of the intermediate shaft 436, or are also possible to be provided as a ring-shaped integrated member of which the center is penetrated, and installed on the inner wall of the housing 410.

The frictional member 450 may generate a brake torque by frictional force when some components of the gear unit 430 move and contact in the axial direction as described below.

The elastic member 460 may be provided as a material having an elastic force, and installed between the housing 410 or the component (e.g., bearing) coupled to the housing 410, and the gear unit 430.

As illustrated, in the exemplary embodiment, the elastic member 460 may be installed between the bearing interposed between the housing 410 and the intermediate shaft 436, and the idle gear 434 of the gear unit 430. However, the exemplary embodiment is not particularly limited thereto, and when a separate structure for supporting the elastic member 460 is provided on the inner wall of the housing 410, the elastic member 460 may be configured to be directly supported on the housing 410.

In the exemplary embodiment, the housing 410, and the idle gear 434 of the gear unit 430 may be elastically supported in the axial direction by the elastic member 460. As described above, the component of the gear unit 430 supported by the elastic member 460 or a member fixed to the component may be initially set to maintain a predetermined gap from the frictional member 450 in the axial direction. Referring to FIG. 7, a state in which a surface of the large gear 434b constituting the idle gear 434 maintains a predetermined gap from the frictional member 450 may be seen.

Here, when a torque transmitted to the crank shaft 420 becomes larger than a predetermined value, for example, when a pedal effort which exceeds the limited reaction force provided by the alternator 400 is input while the pedal of the electric bicycle does not rotate, some components of the gear unit 430 move in an axial direction by an axial force generated from a gear type component provided as a Helical gear among the components of the gear unit 430, and contact the frictional member 450 as illustrated in FIG. 8, and the brake torque is generated due to the contact between the component of the gear unit 430, and the frictional member 450.

The alternator 400' according to the second exemplary embodiment of the present disclosure may also obtain an effect of preventing the 'slip through' phenomenon of the electric bicycle according to the generation of the brake torque as it is with the same principle as described in the first exemplary embodiment.

Referring to FIGS. 7, 8, and 10, under a condition in which the driving motor and the driving wheel of the electric bicycle do not rotate, when a torque transmitted to the crank shaft 420 by the pedal effort of the driver becomes larger than a predetermined value, some components of the gear unit 430 move in an axial direction by the axial force generated from the gear type component provided as the Helical gear among the components of the gear unit 430 (the state of FIG. 7 is changed to the state of FIG. 8), and contact the frictional member 450, and the brake torque is generated due to the contact between the component of the gear unit 430, and the frictional member 450.

More specifically, when the axial force generated between the driving gear 433 and the idle gear 434 of the gear unit 430 becomes larger than the elastic force of the elastic member 460, the driving gear 433 and the idle gear 434 move in the axial direction, and compress the elastic member 460, and the brake torque is generated from a time point when the idle gear 434 contacts the frictional member 450.

At this time, as the torque by the pedal effort becomes larger, the axial force also becomes larger, so as the axial force becomes larger by a relationship of "friction coefficient × vertical drag force", the brake torque generated between the frictional member 450 and the idle gear 434 also increase accordingly, and as a result, it becomes possible to maintain a location of the crank shaft 420 without an increase in torque by the electromagnetic force.

Accordingly, since a lacking reaction force which may not be provided by the alternator 400 may be provided by a brake torque generated by friction of the idle gear 434 and the frictional member 450 from a motor torque limit point (represented by 'P'), the 'slip through' phenomenon of the electric bicycle may be effectively prevented.

Thereafter, when the torque acting on the crank shaft 420 by the pedal effort of the driver is reduced, the brake torque is also reduced and released again while the components of the gear unit 430 including the idle gear 434 returns to the original location by the elastic force of the elastic member 460.

The second exemplary embodiment of the present disclosure has an advantage in that since the brake torque is generated in the gear step in which the torque is reduced rather than the gear directly coupled to the crank shaft 420 unlike the first exemplary embodiment described above, it is possible to implement a function of preventing the 'slip through' phenomenon from occurring even with a smaller brake torque compared to the first exemplary embodiment.

The drive system for an electric bicycle according to the present disclosure, which includes the first and second exemplary embodiments has an effect in that a limit of the pedal reaction force by electromagnetic force is overcome to effectively prevent the 'slip through' phenomenon from occurring. This means that a comfortable pedal sense may be provided to a driver of the electric bicycle, so the merchantability of the electric bicycle may also be significantly enhanced.

Further, the present disclosure has an advantage in that the sizes of the electromagnetic elements (the rotor and the stator) may be excluded from being unnecessarily increased in order to prevent the 'slip through' phenomenon only with the electromagnetic force.

Moreover, according to the present disclosure, since a location of the crank shaft is maintained by the brake torque, the electromagnetic force may be reduced to reduce current consumption and reduce heat dissipation, and a driving distance of the electric bicycle may also be enhanced due to reduced electric energy consumption.

## Claims

1. A drive system for an electric bicycle, comprising: a motor (200) providing a rotational force to a driving wheel; a battery (300) supplying power to the motor (200) ; and an alternator (400, 400') providing a pedal reaction force to a driver, and converting kinetic energy of a pedal into electric energy, and supplying the electric energy to at least any one of the motor (200) and the battery (300) , wherein the alternator (400, 400') includes a housing (410) , a crank shaft (420) installed to penetrate the housing (410) , and having the pedal installed therein, a gear unit (430) installed inside the housing (410) , and speed-increasing or speed-decreasing the rotational force of the pedal, an alternation unit (440) installed inside the housing (410) , and receiving the rotational force of the pedal speed- increased or speed-decreased by the gear unit (430) , and generating the electric energy, **characterised in that** an elastic member (460) installed between the housing (410) and the gear unit (430) , and elastically supporting the housing (410) and the gear unit (430) , and a frictional member (450) which is installed in the housing (410) to maintain a predetermined gap from the gear unit (430) , and in which some components of the gear unit (430) contact by moving in an axial direction when a pedal effort larger than a limited reaction force which is a peak value of the pedal reaction force provided by the alternator (400, 400') is input.

2. The drive system for an electric bicycle according to claim 1, wherein a brake torque is generated by the contact between the some components of the gear unit (430) , and the frictional member (450).

3. The drive system for an electric bicycle according to claim 1, wherein at least some of a plurality of gears (431b, 432b) constituting the gear unit (430) are provided as a Helical gear (431b, 431c, 431d, 432b, 432c, 432d, 433, 434, 435, 434a, 434b) , and the some components of the gear unit (430) move in the axial direction by an axial force generated by the gear (431b, 431c, 431d, 432b, 432c, 432d, 433, 434, 435, 434a, 434b) provided as the Helical gear (431b, 431c, 431d, 432b, 432c, 432d, 433, 434, 435, 434a, 434b).

4. The drive system for an electric bicycle according to claim 1, wherein the elastic member (460) is interposed between the housing (410) or a component coupled to the housing (410) , and the gear unit (430)

5. The drive system for an electric bicycle according to claim 1, wherein the alternation unit (440) includes a rotor (441) coupled to an output side of the gear unit (430) , and rotating, and a stator (442) electromagnetically interacting with the rotor (441).

6. The drive system for an electric bicycle according to claim 1, wherein the gear unit (430) includes a carrier (431a, 432a, 431'a) fixed to the crank shaft (420) , a plurality of planetary gears (431b, 432b) supported by the carrier (431a, 432a, 431'a) , and revolving and rotating with the crank shaft (420) as a central axis by rotation of the carrier (431a, 432a, 431'a) , and a sun gear (431c, 432c) installed on a circumference of the crank shaft (420) , and rotating by engaging with the plurality of planetary gears (431b, 432b)

7. The drive system for an electric bicycle according to claim 6, wherein the gear unit (430) further includes a ring gear (431d, 432d) provided on an inner wall of the housing (410) , and rotating by engaging with the plurality of planetary gears (431b, 432b)

8. The drive system for an electric bicycle according to claim 7, wherein the planetary gear (431b, 432b) , the sun gear (431c, 432c) , and the ring gear (431d, 432d) are provided as the Helical gear (431b, 431c, 431d, 432b, 432c, 432d, 433, 434, 435, 434a, 434b).

9. The drive system for an electric bicycle according to claim 8, wherein when an axial force generated between the planetary gear (431b, 432b) and the ring gear (431d, 432d) is larger than an elastic force of the elastic member (460) , the planetary gear (431b, 432b) and the ring gear (431d, 432d) move in the axial direction on the crank shaft (420).

10. The drive system for an electric bicycle according to claim 6, wherein the elastic member (460) is interposed between the housing (410) or a component coupled to the housing (410) , and the carrier (431a, 432a, 431'a)

11. The drive system for an electric bicycle according to claim 10, wherein the frictional member (450) is installed on an inner surface of the housing (410) facing the carrier (431a, 432a, 431'a)

12. The drive system for an electric bicycle according to claim 1, wherein the gear unit (430) includes a driving gear (433) fixed to the crank shaft (420) , an idle gear (434) installed on an intermediate shaft (436) provided apart from the crank shaft (420) , and rotating by engaging with the driving gear (433) , and a driven gear (435) rotating by engaging with the idle gear (434)

13. The drive system for an electric bicycle according to claim 12, wherein at least some of the driving gear (433) and the idle gear (434) engaged with the driving gear (433) are provided as the Helical gear (431b, 431c, 431d, 432b, 432c, 432d, 433, 434, 435, 434a, 434b)

14. The drive system for an electric bicycle according to claim 13, wherein when an axial force generated between the driving gear (433) and the idle gear (434) is larger than an elastic force of the elastic member (460) , the driving gear (433) and the idle gear (434) move in the axial direction on the crank shaft (420) and the intermediate shaft (436) , respectively.

15. The drive system for an electric bicycle according to claim 12, wherein the elastic member (460) is interposed between the housing (410) or a component coupled to the housing (410) , and the idle gear (434) , and the frictional member (450) is installed on an inner surface of the housing (410) facing the idle gear (434).

## Patentansprüche

1. Antriebssystem für ein Elektrofahrrad, umfassend: einen Motor (200), der eine Drehkraft auf ein Antriebsrad bereitstellt; eine Batterie (300), die den Motor (200) mit Leistung versorgt; und einen Generator (400, 400'), der einem Fahrer eine Pedalreaktionskraft bereitstellt, die kinetische Energie eines Pedals in elektrische Energie umwandelt und die elektrische Energie zumindest einem von dem Motor (200) und der Batterie (300) zuführt, wobei der Generator (400, 400') ein Gehäuse (410), eine Kurbelwelle (420), die so installiert ist, dass sie das Gehäuse (410) durchdringt und an der das Pedal installiert ist, eine Getriebeeinheit (430), die im Inneren des Gehäuses (410) installiert ist und die die Drehkraft des Pedals erhöht oder verringert, eine Generatoreinheit (440), die im Inneren des Gehäuses (410) installiert ist, die die durch die Getriebeeinheit (430) erhöhte oder verringerte Drehkraft des Pedals aufnimmt und die die elektrische Energie erzeugt, **dadurch gekennzeichnet, dass** ein elastisches Element (460) zwischen dem Gehäuse (410) und der Getriebeeinheit (430) installiert ist und das Gehäuse (410) und die Getriebeeinheit (430) elastisch stützt, und ein Reibungselement (450) in dem Gehäuse (410) installiert ist, um einen vorbestimmten Abstand zu der Getriebeeinheit (430) aufrechtzuerhalten, wobei einige Komponenten der Getriebeeinheit (430) durch Bewegung in axialer Richtung in Kontakt treten, wenn eine Pedalkraft, die größer als eine begrenzte Reaktionskraft ist, die den Spitzenwert der von dem Generator (400, 400') bereitgestellten Pedalreaktionskraft darstellt, aufgebracht wird.

2. Antriebssystem für ein Elektrofahrrad nach Anspruch 1, wobei durch den Kontakt zwischen einigen der Komponenten der Getriebeeinheit (430) und dem Reibungselement (450) ein Bremsmoment erzeugt wird.

3. Antriebssystem für ein Elektrofahrrad nach Anspruch 1, wobei zumindest einige einer Mehrzahl von Zahnrädern (431b, 432b), die die Getriebeeinheit (430) bilden, als Schrägzahnrad (431b, 431c, 431d, 432b, 432c, 432d, 433, 434, 435, 434a, 434b) ausgebildet sind und sich einige der Komponenten der Getriebeeinheit (430) durch Axialkraft, die durch das als Schrägzahnrad (431b, 431c, 431d, 432b, 432c, 432d, 433, 434, 435, 434a, 434b) ausgebildete Zahnrad (431b, 431c, 431d, 432b, 432c, 432d, 433, 434, 435, 434a, 434b) erzeugt wird, in axialer Richtung bewegen.

4. Antriebssystem für ein Elektrofahrrad nach Anspruch 1, wobei das elastische Element (460) zwischen dem Gehäuse (410) oder einer mit dem Gehäuse (410) gekoppelten Komponente und der Getriebeeinheit (430) angeordnet ist.

5. Antriebssystem für ein Elektrofahrrad nach Anspruch 1, wobei die Generatoreinheit (440) einen Rotor (441), der mit einer Ausgangsseite der Getriebeeinheit (430) gekoppelt ist und sich dreht, und einen Stator (442), der elektromagnetisch mit dem Rotor (441) interagiert, umfasst.

6. Antriebssystem für ein Elektrofahrrad nach Anspruch 1, wobei die Getriebeeinheit (430) einen Träger (431a, 432a, 431'a), der an der Kurbelwelle (420) befestigt ist, eine Mehrzahl von Planetenrädern (431b, 432b), die von dem Träger (431a, 432a, 431'a) gestützt werden und sich durch die Drehung des Trägers (431a, 432a, 431'a) mit der Kurbelwelle (420) als Zentralachse umlaufend bewegen und drehen, und ein Sonnenrad (431c, 432c), das am Umfang der Kurbelwelle (420) installiert ist und sich durch Eingriff mit der Mehrzahl von Planetenrädern (431b, 432b) dreht, umfasst.

7. Antriebssystem für ein Elektrofahrrad nach Anspruch 6, wobei die Getriebeeinheit (430) weiterhin ein Hohlrad (431d, 432d) umfasst, das an einer Innenwand des Gehäuses (410) bereitgestellt ist und sich durch Eingriff mit der Mehrzahl von Planetenrädern (431b, 432b) dreht.

8. Antriebssystem für ein Elektrofahrrad nach Anspruch 7, wobei das Planetenrad (431b, 432b), das Sonnenrad (431c, 432c) und das Hohlrad (431d, 432d) als Schrägzahnrad (431b, 431c, 431d, 432b, 432c, 432d, 433, 434, 435, 434a, 434b) ausgebildet sind.

9. Antriebssystem für ein Elektrofahrrad nach Anspruch 8, wobei sich, wenn eine zwischen dem Planetenrad (431b, 432b) und dem Hohlrad (431d, 432d) erzeugte Axialkraft größer als eine elastische Kraft des elastischen Elements (460) ist, das Planetenrad (431b, 432b) und das Hohlrad (431d, 432d) in axialer Richtung auf der Kurbelwelle (420) bewegen.

10. Antriebssystem für ein Elektrofahrrad nach Anspruch 6, wobei das elastische Element (460) zwischen dem Gehäuse (410) oder einer mit dem Gehäuse (410) gekoppelten Komponente und dem Träger (431a, 432a, 431'a) angeordnet ist.

11. Antriebssystem für ein Elektrofahrrad nach Anspruch 10, wobei das Reibungselement (450) auf einer Innenfläche des Gehäuses (410), die dem Träger (431a, 432a, 431'a) zugewandt ist, installiert ist.

12. Antriebssystem für ein Elektrofahrrad nach Anspruch 1, wobei die Getriebeeinheit (430) ein Antriebszahnrad (433), das an der Kurbelwelle (420) befestigt ist, ein Leerlaufzahnrad (434), das auf einer Zwischenwelle (436), die von der Kurbelwelle (420) räumlich getrennt bereitgestellt ist, installiert ist und sich durch Eingriff mit dem Antriebszahnrad (433) dreht, und ein Abtriebszahnrad (435), das sich durch Eingriff mit dem Leerlaufzahnrad (434) dreht, umfasst.

13. Antriebssystem für ein Elektrofahrrad nach Anspruch 12, wobei zumindest Einige des Antriebszahnrads (433) und des mit dem Antriebszahnrad (433) in Eingriff stehenden Leerlaufzahnrads (434) als Schrägzahnrad (431b, 431c, 431d, 432b, 432c, 432d, 433, 434, 435, 434a, 434b) ausgebildet sind.

14. Antriebssystem für ein Elektrofahrrad nach Anspruch 13, wobei sich, wenn eine zwischen dem Antriebszahnrad (433) und dem Leerlaufzahnrad (434) erzeugte Axialkraft größer als eine elastische Kraft des elastischen Elements (460) ist, das Antriebszahnrad (433) und das Leerlaufzahnrad (434) in axialer Richtung auf der Kurbelwelle (420) bzw. der Zwischenwelle (436) bewegen.

15. Antriebssystem für ein Elektrofahrrad nach Anspruch 12, wobei das elastische Element (460) zwischen dem Gehäuse (410) oder einer mit dem Gehäuse (410) gekoppelten Komponente und dem Leerlaufzahnrad (434) angeordnet ist und das Reibungselement (450) auf einer Innenfläche des Gehäuses (410), die dem Leerlaufzahnrad (434) zugewandt ist, installiert ist.

## Revendications

1. Système d'entraînement pour une bicyclette électrique, comprenant :
un moteur (200) transmettant une force de rotation à une roue motrice ; une batterie (300) alimentant le moteur (200) ; et un alternateur (400, 400') transmettant une force de réaction de pédale à un dispositif d'entraînement, convertissant l'énergie cinétique d'une pédale en énergie électrique, et alimentant le moteur (200) et/ou la batterie (300) en énergie électrique, ledit alternateur (400, 400') comprenant un boîtier (410), un vilebrequin (420) monté de manière à pénétrer dans le boîtier (410), et à l'intérieur duquel est montée la pédale, une unité d'engrenages (430) montée à l'intérieur du boîtier (410) et élevant ou réduisant la vitesse de rotation de la pédale, une unité d'alternance (440) montée à l'intérieur du boîtier (410), et recevant la force de rotation de la vitesse de pédale - élevée ou réduite par l'unité d'engrenages (430), et générant l'énergie électrique, **caractérisé par** un élément élastique (460) monté entre le boîtier (410) et l'unité d'engrenages (430), et supportant élastiquement le boîtier (410) et l'unité d'engrenages (430), ainsi qu'un élément de friction (450) monté dans le boîtier (410) pour maintenir un espacement prédéterminé par rapport à l'unité d'engrenages (430), et où certains composants de l'unité d'engrenages (430) viennent en contact par déplacement dans une direction axiale si un effort de pédale supérieur à une force de réaction limitée, laquelle est une valeur maximale de la force de réaction de pédale transmise par l'alternateur (400, 400'), est entré.

2. Système d'entraînement pour une bicyclette électrique selon la revendication 1, où un couple de freinage est généré par contact entre certains composants de l'unité d'engrenages (430) et l'élément de friction (450).

3. Système d'entraînement pour une bicyclette électrique selon la revendication 1, où au moins quelques engrenages d'une pluralité d'engrenages (431b, 432b) constituant l'unité d'engrenages (430) sont présentés sous forme d'engrenages hélicoïdaux (431b, 431c, 431d, 432b, 432c, 432d, 433, 434, 435, 434a, 434b), et certains composants de l'unité d'engrenages (430) se déplacent dans la direction axiale sous l'effet d'une force axiale générée par l'engrenage (431b, 431c, 431d, 432b, 432c, 432d, 433, 434, 435, 434a, 434b) présenté sous forme d'engrenage hélicoïdal (431b, 431c, 431d, 432b, 432c, 432d, 433, 434, 435, 434a, 434b).

4. Système d'entraînement pour une bicyclette électrique selon la revendication 1, où l'élément élastique (460) est intercalé entre le boîtier (410) ou un composant raccordé au boîtier (410), et l'unité d'engrenages (430).

5. Système d'entraînement pour une bicyclette électrique selon la revendication 1, où l'unité d'alternance (440) comprend un rotor (441) raccordé à un côté de sortie de l'unité d'engrenages (430), et rotatif, et un stator (442) en interaction électromagnétique avec le rotor (441).

6. Système d'entraînement pour une bicyclette électrique selon la revendication 1, où l'unité d'engrenages (430) comprend un support (431a, 432a, 431'a) fixé au vilebrequin (420), une pluralité d'engrenages planétaires (431b, 432b) supportés par le support (431a, 432a, 431'a), et tournant avec le vilebrequin (420) en tant qu'axe central par rotation du support (431a, 432a, 43i'a), et une roue solaire (431c, 432c) montée sur une circonférence du vilebrequin (420), et tournant par engrènement avec la pluralité d'engrenages planétaires (431b, 432b)

7. Système d'entraînement pour une bicyclette électrique selon la revendication 6, où l'unité d'engrenages (430) comprend en outre une couronne dentée (431d, 432d) prévue sur une paroi interne du boîtier (410), et tournant par engrènement avec la pluralité d'engrenages planétaires (431b, 432b).

8. Système d'entraînement pour une bicyclette électrique selon la revendication 7, où l'engrenage planétaire (431b, 432b), la roue solaire (431c, 432c) et la couronne dentée (431d, 432d) sont présentés sous forme d'engrenage hélicoïdal (431b, 431c, 431d, 432b, 432c, 432d, 433, 434, 435, 434a, 434b).

9. Système d'entraînement pour une bicyclette électrique selon la revendication 8, où, si une force axiale générée entre l'engrenage planétaire (431b, 432b) et la couronne dentée (431d, 432d) est supérieure à une force élastique de l'élément élastique (460), l'engrenage planétaire (431b, 432b) et la couronne dentée (431d, 432d) se déplacent dans la direction axiale sur le vilebrequin (420).

10. Système d'entraînement pour une bicyclette électrique selon la revendication 6, où l'élément élastique (460) est intercalé entre le boîtier (410) ou un composant raccordé au boîtier (410), et le support (431a, 432a, 431a)

11. Système d'entraînement pour une bicyclette électrique selon la revendication 10, où l'élément de friction (450) est monté sur une surface interne du boîtier (410) opposée au support (431a, 432a, 431'a)

12. Système d'entraînement pour une bicyclette électrique selon la revendication 1, où l'unité d'engrenages (430) comprend un engrenage d'entraînement (433) fixé au vilebrequin (420), un engrenage libre (434) monté sur un arbre intermédiaire (436) espacé du vilebrequin (420) et tournant par engrènement avec l'engrenage d'entraînement (433), et un engrenage entraîné (435) tournant par engrènement avec l'engrenage libre (434)

13. Système d'entraînement pour une bicyclette électrique selon la revendication 12, dans lequel au moins une partie de l'engrenage d'entraînement (433) et l'engrenage libre (434) engrené avec l'engrenage d'entraînement (433) sont prévus comme engrenages hélicoïdaux (431b, 431c, 431d, 432b, 432c, 432d, 433, 434, 435, 434a, 434b).

14. Système d'entraînement pour une bicyclette électrique selon la revendication 13, où, si une force axiale générée entre l'engrenage d'entraînement (433) et l'engrenage libre (434) est supérieure à une force élastique de l'élément élastique (460), l'engrenage d'entraînement (433) et l'engrenage libre (434) se déplacent dans la direction axiale sur le vilebrequin (420) et l'arbre intermédiaire (436), respectivement.

15. Système d'entraînement pour une bicyclette électrique selon la revendication 12, où l'élément élastique (460) est intercalé entre le boîtier (410) ou un composant raccordé au boîtier (410), et l'engrenage libre (434), et l'élément de friction (450) est monté sur une surface interne du boîtier (410) opposée à l'engrenage libre (434).
